(19) Europäisches Patentamt
European Patent Office
Office européen des brevets

(11) **EP 2 015 097 B1**

(12) **FASCICULE DE BREVET EUROPEEN**

(45) Date de publication et mention de la délivrance du brevet:
**11.08.2010   Bulletin 2010/32**

(51) Int Cl.:
***G01S 1/00*** *(2006.01)*

(21) Numéro de dépôt: **08290620.7**

(22) Date de dépôt: **26.06.2008**

(54) **Procédé de détermination de limite de protection autour d'une position d'un corps mobile calculée à partir de signaux satellitaires**

Verfahren zur Bestimmung der Schutzgrenze um eine Position eines mobilen Körpers, die mit Hilfe von Satellitensignalen berechnet wird

Method of determining the protection limit around one position of a mobile body calculated using satellite signals

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **13.07.2007   FR 0705091**

(43) Date de publication de la demande:
**14.01.2009   Bulletin 2009/03**

(73) Titulaire: **SAGEM DEFENSE SECURITE**
**75015 Paris (FR)**

(72) Inventeur: **Vacher, Charlie**
**75018 Paris (FR)**

(74) Mandataire: **Lavialle, Bruno François Stéphane et al**
**Cabinet Boettcher**
**22 rue du Général Foy**
**75008 Paris (FR)**

(56) Documents cités:
**EP-A- 1 462 761     EP-A- 1 729 145**
**WO-A-03/029755**

• **DIESEL J ET AL: "GPS/IRS AIME: Calculation of Thresholds and Protection Radius Using Chi-Square Methods" PROCEEDINGS OF THE INSTITUTE OF NAVIGATION (ION) GPS, XX, XX, septembre 1995 (1995-09), pages 1959-1964, XP002434515**

**Description**

La présente invention concerne un procédé de détermination de limite de protection autour d'une position d'un corps mobile calculée à partir de données satellitaires. Ce procédé peut notamment être mis en oeuvre pour la localisation d'un véhicule par exemple, dans le système de positionnement global connu sous l'acronyme GPS ("Global Positioning System").

ARRIERE PLAN DE L'INVENTION

Classiquement, la localisation d'un véhicule, tel qu'un aéronef, est réalisée à partir, d'une part, de données fournies par une centrale de mesure embarquée (incluant par exemple une centrale inertielle et un baroaltimètre) et, d'autre part, de données issues de signaux satellitaires provenant d'une constellation de satellites en orbite autour de la Terre. Les données issues de signaux satellitaires sont des distances (ou pseudo-distances) séparant l'aéronef des satellites émetteurs des signaux satellitaires, qui sont calculées à partir de la position des satellites et de la durée nécessaires aux signaux pour parvenir jusqu'à l'aéronef. Le traitement combiné de ces données, par exemple au moyen d'un filtre de calcul de type KALMAN, permet de déterminer l'état de l'aéronef, c'est-à-dire notamment une position précise proche de la position réelle de l'aéronef, la vitesse et l'attitude de l'aéronef.

Entre les réceptions de signaux satellitaires, la position de l'aéronef est extrapolée ou estimée à partir des données inertielles appliquées à la dernière position calculée. La position ainsi déterminée est périodiquement recalée à chaque réception de signaux satellitaires.

La précision de la position calculée est toutefois fortement sensible à une défaillance de la constellation de satellites, c'est-à-dire en cas d'une défaillance d'un satellite qui affecterait l'exactitude des données transmises et qui ne serait pas détectée, ou en cas d'une défaillance simultanée ou de défaillances consécutives de deux satellites de la constellation (le risque de défaillance simultanée de trois satellites est tellement faible qu'il est en général négligé).

Il est pour cette raison habituel de fournir au pilote de l'aéronef une limite ou un volume, dit de protection, centré sur la position calculée et représentatif de la précision de cette position en tenant compte du risque de défaillance d'un ou deux satellites. Le volume global de protection est un cylindre d'axe vertical défini par son rayon et sa hauteur usuellement nommés HPL et VPL. La position réelle de l'aéronef, si elle ne coïncide pas exactement avec la position calculée, a une probabilité au plus égale à un seuil de sécurité acceptable (ou risque d'intégrité) de se trouver hors du volume global de protection.

Le calcul du volume de protection suppose de définir le risque d'intégrité en tenant compte de la probabilité d'une absence de défaillance, de la survenue d'une défaillance et de la survenue de deux défaillances de la constellation de satellites. Le calcul du volume de protection correspondant à chaque cas repose sur la distribution statistique de l'erreur de position. Le volume global de protection est déterminé de telle manière que le risque d'intégrité soit au moins égal à la probabilité pour que la position réelle soit dans le volume de protection. Il existe plusieurs méthodes de calcul de ce volume de protection. Le document US-A-2004239560 décrit une de ces méthodes de calcul.

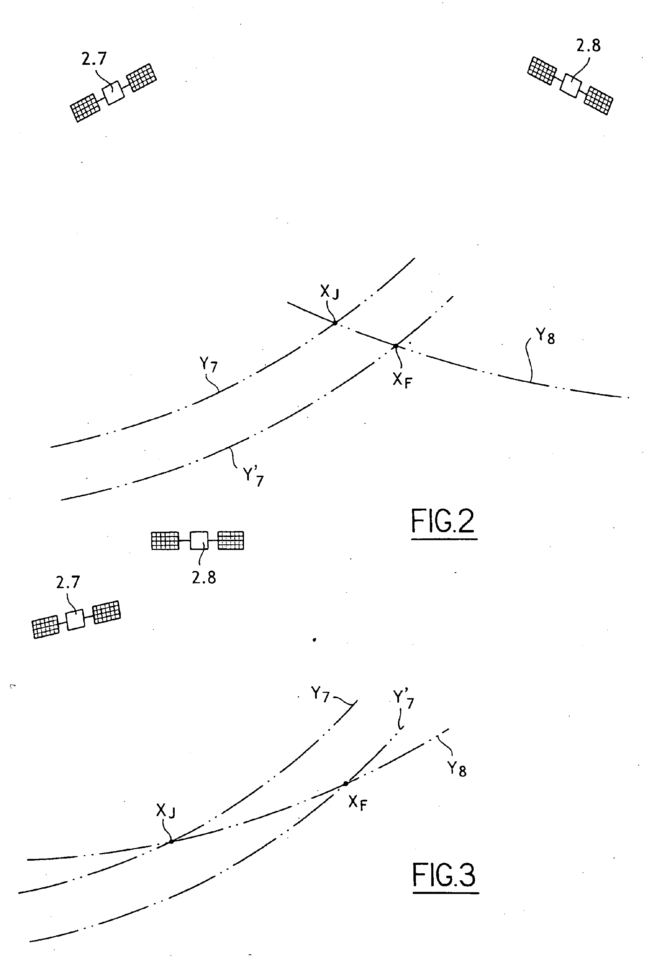

Les défaillances de la constellation de satellites ne sont cependant pas les seuls évènements à pouvoir affecter la précision de la position calculée. Ainsi, il arrive que les signaux subissent des réflexions, par exemple sur le relief, au cours du trajet des signaux vers le véhicule. Ces réflexions (on parle en général de multi trajet) augmentent la durée séparant l'émission des signaux par les satellites et la réception des signaux par l'aéronef et faussent le calcul des pseudo-distances. Aux figures 2 et 3, ont été représentés deux exemples extrêmement simplifiés montrant l'impact de ces réflexions sur le calcul de la composante verticale de la position d'un aéronef à partir de seulement deux satellites. Les lignes $y_7$ et $y_7'$ représentent les pseudo-distances séparant l'aéronef d'un satellite 2.7 respectivement en l'absence de multi trajet et en présence de multi trajet, la ligne $y_8$ représente la pseudo-distance séparant l'aéronef d'un satellite 2.8 en l'absence de multi trajet. La position juste $X_j$ de l'aéronef est à l'intersection des lignes $y_7$ et $y_8$. On peut voir sur la figure 2, où l'aéronef est entre des satellites très écartés, que la position juste $X_j$ est au-dessus de la position faussée $X_F$ alors que c'est l'inverse à la figure 3 où les satellites sont rapprochés. Ce dernier cas est particulièrement gênant dans le cas d'un aéronef pour lequel la précision de la composante verticale par rapport à la surface terrestre est essentielle.

Dans les procédés actuels, la limite de protection verticale est identique vers le haut ou vers le bas alors que, comme il l'est rappelé ci-dessus, une imprécision dans l'un ou l'autre sens n'a pas les mêmes conséquences, en particulier dans certaines circonstances, notamment pour un aéronef en vol de basse altitude ou en phase d'atterrissage. En outre dans les procédés actuels la limite de protection verticale n'est pas robuste aux multi-trajets.

Le document EP-A-1729145 décrit un procédé pour déterminer la limite de protection en présence de trajets multiples.

OBJET DE L'INVENTION

Un but de l'invention est de fournir un moyen permettant d'affiner le calcul des limites de protection dans deux directions opposées.

RESUME DE L'INVENTION

A cet effet, on prévoit, selon l'invention, un procédé de détermination de limite de protection autour d'une position $X_1$ d'un corps mobile équipé d'un récepteur de signaux satellites, la position $X_1$ étant calculée à partir de pseudo-distances calculées à partir de données positionnelles et temporelles issues de signaux transmis par une constellation de satellites, le procédé comprenant l'étape de calculer une limite de protection $VPL_1$ dans une première direction depuis la position $X_1$, le procédé comprenant en outre les étapes de :

- calculer une marge $MMM_+$ correspondant à un décalage, de la position calculée par rapport à une position réelle $X$ du corps mobile, qui soit dans la première direction et qui soit dû à des réflexions des signaux au cours de leur transmission,
- calculer une deuxième limite de protection $PL_2$ sur la position calculée dans une deuxième direction opposée à la première direction depuis la position calculée, en y incorporant la marge.

Le terme "direction" est ici utilisé dans son sens courant (similaire à celui de vecteur) pour indiquer l'orientation depuis une origine vers un point donné parallèlement à une droite passant par l'origine et ce point. Ainsi, en considérant l'axe vertical, deux directions opposées désignent respectivement vers le haut et vers le bas parallèlement à cet axe. Dans le procédé de l'invention, la limite de protection dans la deuxième direction incorpore une marge pour tenir compte des réflexions des signaux. Il est de la sorte possible d'avoir dans la première et la deuxième direction des limites de protection différentes selon la criticité d'une erreur dans ces directions.

De préférence, le calcul de la position $X_1$ à partir des pseudo-distances étant effectué en utilisant une matrice Hv d'observation de la constellation intégrant des paramètres positionnels et temporels, le calcul de la marge $MMM_+$ et de la deuxième limite de protection $VPL_2$ comprend les étapes de :

- estimer un biais d'horloge $\hat{b}$ du récepteur et déterminer un impact maximal $b_{max}$ des réflexions sur le biais d'horloge estimé,
- corriger les pseudo-distances avec le biais d'horloge estimé,
- calculer une erreur maximale $\Delta Y'$ sur les pseudo-distances corrigées due à l'impact maximal $b_{max}$ ;
- calculer une deuxième position $X_2$ à partir des pseudo-distances corrigées de l'impact $b_{max}$ et d'une sous-matrice $H_F$ de la matrice d'observation $H_V$, la sous-matrice $H_F$ intégrant les paramètres positionnels seulement,
- calculer la marge $MMM_+$ à partir de la pseudo-inverse $G'$ de la sous-matrice $H_F$ et de l'erreur maximale $\Delta Y'$,
- calculer la deuxième limite de protection $VPL_2$ en ajoutant à la première limite de protection $VPL_1$ la marge $MMM_+$ et une distance entre la première position $X_1$ et la deuxième position $X_2$ parallèlement aux directions.

Ce mode de calcul est particulièrement approprié à la mise en oeuvre de l'invention.

D'autres caractéristiques et avantages de l'invention ressortiront à la lecture de la description qui suit d'un mode de mise en oeuvre particulier, non limitatif, de l'invention.

BREVE DESCRIPTION DES DESSINS

Il sera fait référence aux dessins annexés, parmi lesquels :

- la figure 1 est une représentation schématique d'une constellation de satellites présents au-dessus de l'horizon d'un aéronef,
- les figures 2 et 3 sont des représentations schématiques montrant la détermination de la composante verticale de la position d'un aéronef.

DESCRIPTION DETAILLEE DE L'INVENTION

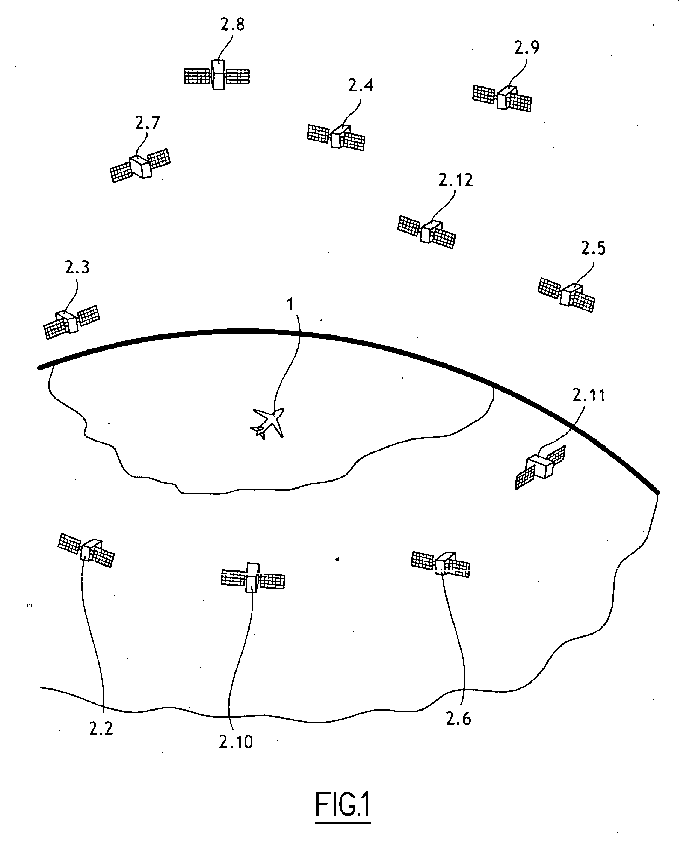

En référence à la figure 1, le procédé de l'invention est ici décrit en relation avec un aéronef 1 embarquant un système de navigation utilisant des données issues de N satellites 2.i (avec i variant de 1 à N, soit 2.1, 2.2, 2.3, 2.4, 2.5, 2.6, 2.7, 2.8, 2.9, 2.10, 2.11, 2.12 sur la figure) en orbite autour de la Terre 100 et des données issues d'une centrale inertielle embarquée sur l'aéronef 1.

La centrale inertielle est connue en elle-même et délivre, à partir de capteurs fixés à l'aéronef 1, des données relatives notamment à l'assiette de l'aéronef 1, sa vitesse...

Les satellites 2.1 à 2.12 font partie d'un ensemble de satellites qui sont positionnés en orbite autour de la Terre et qui appartiennent à un système de localisation par satellites de type GPS. Chaque satellite 2.i émet en permanence un signal comportant sa localisation et l'heure précise d'émission du signal. Les N satellites 2.i émettent ainsi à intervalle régulier N signaux appelés par la suite données satellitaires.

Le système de navigation comprend de façon connue en elle-même une unité de calcul reliée à la centrale inertielle et à un récepteur des signaux issus des satellites. L'unité de calcul incorpore de façon connue en elle-même des processeurs et des mémoires lui permettant de calculer une pseudo-distance séparant l'aéronef 1 de chaque satellite 2.i dont le signal est détecté par le récepteur et de réaliser une fusion de ces pseudo-distances et des données provenant de la centrale inertielle afin de déterminer entre autres une position de l'aéronef 1.

Les calculs sont réalisés de manière connue en elle-même en utilisant des filtres de Kalman ou tout autre algorithme permettant de réaliser notamment une fusion de données.

Le système de navigation calcule et fournit ainsi périodiquement un état de l'aéronef, c'est-à-dire une position, une vitesse et une attitude de l'aéronef, à partir des données inertielles et des données satellitaires. La position est définie par une composante horizontale (ici une latitude et une longitude) et une composante verticale (ici une altitude).

Entre deux réceptions de signaux satellitaires, le système de navigation calcule et fournit des positions estimées à partir des seules données inertielles (qui sont obtenues continûment) en partant de positions antérieures, cette opération est appelée propagation. A la réception de nouvelles données satellitaires, la position estimée est recalée en fonction de l'innovation desdites données satellitaires, cette opération est appelée recalage. Le recalage n'est effectué que si les données satellitaires satisfont à un test de validité connu en lui-même et appelé test d'innovation.

Pour chaque position calculée, le système fournit également un volume de protection défini par une limite de protection horizontale *HPL* et une limite de protection verticale *VPL* calculées à partir des données satellitaires. Pour simplifier, on parle dans un premier temps de la limite de protection *VPL* (le principe de calcul de la limite de protection verticale et de la limite de protection horizontale étant sensiblement identique).

Le volume de protection, qui doit être le plus petit possible, est déterminé pour que, si la position réelle *X* de l'aéronef ne coïncide pas exactement avec la position calculée, cette position réelle a une probabilité au plus égale à un seuil de sécurité acceptable de se trouver hors du volume global de protection.

De manière générale, chaque limite de protection est calculée à partir d'une probabilité de défaillance de la constellation de satellites, d'une probabilité d'absence de défaillance de la constellation de satellites et d'un premier seuil de sécurité $P_{ir}$ prédéterminé. On a ainsi $p(e \geq PL) \leq P_{ir}$, la probabilité que l'erreur de position e, soit supérieure à la limite de protection, est inférieure ou égale au seuil de sécurité $P_{ir}$ acceptable en cas de défaillance de la constellation de satellites (ce seuil de sécurité est également appelé risque d'intégrité). La limite de protection est calculée de façon connue en elle-même à partir de la distribution statistique de l'erreur sur la position calculée (distribution gaus-sienne pour la composante verticale de la position et distribution $X^2$ pour la composante horizontale de la position). Le risque d'intégrité $P_{ir}$ ne doit pas être dépassé en cas de panne d'un ou de deux des satellites de la constellation. Une panne de trois satellites de la constellation a une probabilité de $10^{-12}$ et est négligée.

Le calcul de la limite de protection verticale va maintenant être décrite autour d'une position calculée $X_1$.

La position calculée $X_1$ a été obtenue de manière classique à partir des pseudo-distances *Y* et de la matrice *Hv* d'observation de la constellation satellite incorporant des paramètres positionnels - les cosinus directeurs pour chaque satellite 2.i (permettant de relier géométriquement chaque satellite à l'aéronef) - et des paramètres temporels relatifs à un biais d'horloge du récepteur identiques pour tous les satellites (ici égal à 1).

On a donc $H_v=[u_i 1]$ dont la pseudo inverse est G = $(H_v^T.H_v)^{-1}.H_v^T$. La composante verticale $\hat{z}_1$ de la position $x_1$ est obtenue par $\hat{z}_1=[0010].G.Y$.

Une limite de protection *VPL* est calculée de la manière classique à partir de la distribution statistique de l'erreur sur la composante verticale.

Une première limite de protection $VPL_1$, vers le haut est égale à *VPL.*

Une deuxième limite de protection $VPL_2$, vers le bas, est ensuite calculée.

Pour se faire, le biais d'horloge $\hat{b}$ tel que $\hat{b}=[G_{4i}Y]$ est estimé et l'impact maximal $b_{max}$ des réflexions sur le biais d'horloge estimé est calculé à partir de la formule suivante :

$$b_{\max} = \max\left(\sum_{Gi>0} G_{4i}, \sum_{Gi<0} G_{4i}\right).\Delta Y$$

où $G_{4i}$ sont les paramètres temporels de la matrice *G* (les sommes portant respectivement sur les $G_{4i}$ positifs et les $G_{4i}$

négatifs) et $\Delta Y$ est l'erreur de mesure maximale possible due aux réflexions.

Cette erreur est liée aux propriétés du récepteur de signaux satellitaires et est calculée par exemple au moyen d'un procédé comprenant une étape au cours de laquelle on détermine un signal représentatif d'une énergie de corrélation entre le signal reçu et un signal de réplique, et une étape au cours de laquelle on recherche un décalage entre le signal déterminé et un signal centré représentatif d'une énergie d'autocorrélation d'un code pseudo-aléatoire, ledit décalage ainsi recherché correspondant à l'erreur de poursuite du code.

Au cours de ce procédé, la recherche du décalage entre le signal centré et le signal déterminé consiste en outre à décaler d'une durée de décalage le signal déterminé.

De manière plus précise le décalage recherché entre le signal centré et le signal déterminé correspond à la durée du décalage du signal déterminé qui produit le signal déterminé le plus proche du signal centré.

Selon un premier un mode de réalisation la recherche du décalage entre le signal déterminé et le signal centré comprend le calcul, pour chaque durée du décalage du signal déterminé, de la somme quadratique des écarts entre le signal centré et le signal déterminé, cette somme quadratique étant limitée à la partie ascendante du signal centré. Le décalage recherché est le décalage du signal déterminé pour lequel la somme quadratique des écarts calculée est minimale.

Selon un deuxième mode de réalisation la recherche du décalage entre le signal déterminé et le signal centré consiste à détecter le maximum du signal déterminé. La détection du maximum du signal déterminé consiste à calculer pour chaque durée du décalage du signal déterminé l'énergie du signal déterminé, le décalage recherché étant le décalage du signal déterminé produisant l'énergie du signal déterminé maximale.

Selon un troisième mode de réalisation la recherche du décalage entre le signal déterminé et le signal centré consiste à détecter une rupture de pente du signal déterminé. La détection de la rupture de pente consiste à calculer la différence d'énergie entre deux signaux déterminés successivement décalés.

Selon un quatrième mode de réalisation la recherche du décalage entre le signal déterminé et le signal centré comprend le calcul, pour chaque durée du décalage du signal déterminé, du produit de corrélation entre le signal centré et le signal déterminé ainsi décalé, le signal centré étant limité à sa partie ascendante. Le décalage recherché est le décalage du signal déterminé pour lequel le produit de corrélation calculé est maximal.

Les pseudo distances $Y$ sont ensuite corrigées à partir du biais d'horloge estimé $\hat{b}$, soit $Y'= Y-\hat{b}$, et l'erreur maximale $\Delta Y'$ due aux réflexions sur les pseudo-distances corrigées $Y'$ est calculée telle que $\Delta Y'=\Delta Y+b_{max}$.

Une deuxième position $X_2$ est ensuite calculée à partir des pseudo-distances corrigées $Y'$ et d'une sous-matrice $H_F$ de la matrice d'observation $H_V$ telle que la sous-matrice $H_F$ n'intègre que les paramètres positionnels de la matrice d'observation $H_v$ soit $H_v = [H_F\ 1_{nx1}]$ avec $H_F=[u_i]$.

La composante verticale $\hat{z}_2$ de la position $X_2$ est donc égale à $\hat{z}_2=G'Y'$ avec $G'=(H_F{}^T.H_F{}^T)^{-1}.H_F{}^T$.

Il est ensuite calculé une marge $MMM+$ telle que $MMM+ = \sum_{i/G_{3i}>0} G'_{3i}.\Delta Y'$ avec $G_{3i}'$ représentant les paramètres liés à la composante verticale dans la matrice $G$, la somme ne portant que sur ceux supérieurs à 0.

La distance entre les positions $X_1$ et $X_2$ selon l'axe vertical est ensuite calculée soit $d(X_1, X_2)_2$. La deuxième limite de protection $VPL_2$ est alors égale à :

$$VPL_2 = VPL + MMM_+ + d(X_1,X_2)z.$$

En variante, l'impact maximal $b_{max}$ peut être calculé avec la formule suivante :

$$bmax = \sum |G_{ui}|.\Delta Y$$

et la deuxième limite de protection selon la formule suivante :

$$VPL_2 = \sum_{i/G'_{3i}>0} G'_{3i} \Delta Y'.$$

En variante encore, il est possible de calculer une marge pour la première limite de protection $VPL_1$ avec $VPL_1$

# EP 2 015 097 B1

$$= VPL + MMM_- + d(X_1,X_2)z \text{ où} \qquad \overline{VPL_1} = \overline{VPL} + \overline{MMM_-} + \overline{d(X_1,X_2)z} \text{ où } \overline{MMM_-} = \sum_{i/G_{3i}<0} \overline{G'}_{3i}.\Delta Y'.$$

Bien entendu, l'invention n'est pas limitée aux modes de mise en oeuvre décrits mais englobe toute variante entrant dans le cadre de l'invention telle que définie dans les revendications.

Les positions peuvent être estimées à partir de données satellitaires uniquement ou à partir également des données provenant d'une centrale de mesure comme une centrale inertielle.

L'invention est applicable à tout corps mobile comme un véhicule terrestre, marin, ou autre.

Si le système de navigation par satellites ne peut fonctionner avec une position excentrée par rapport aux limites de protection calculées, le procédé comprend l'étape de faire une somme des limites de protection et l'étape de calculer une position centrée par rapport à cette somme.

Le calcul des limites de protection différenciées selon deux directions différentes peut également être appliqué à des directions horizontales.

## Revendications

**1.** Procédé de détermination de limite de protection autour d'une position $X_1$ d'un corps mobile équipé d'un récepteur de signaux satellites, la position $X_1$ étant calculée à partir de pseudo-distances calculées à partir de données positionnelles et temporelles issues de signaux transmis par une constellation de satellites, le procédé comprenant l'étape de calculer une limite de protection $VPL_1$ dans une première direction depuis la position $X_1$, **caractérisé en ce que** le procédé comprend en outre les étapes de :

- calculer une marge $MMM_+$ correspondant à un décalage, de la position calculée par rapport à une position réelle $X_F$ du corps mobile, qui soit dans la première direction et qui soit du à des réflexions des signaux au cours de leur transmission,
- calculer une deuxième limite de protection $VPL_2$ sur la position calculée dans une deuxième direction opposée à la première direction depuis la position calculée, en y incorporant la marge.

**2.** Procédé selon la revendication 1, dans lequel, le calcul de la position $X_1$ à partir des pseudo-distances étant effectué en utilisant une matrice $Hv$ d'observation de la constellation intégrant des paramètres positionnels et temporels, le calcul de la marge $MMM_+$ et de la deuxième limite de protection $VPL_2$ comprend les étapes de :

- estimer un biais d'horloge $\hat{b}$ du récepteur et déterminer un impact maximal $b_{max}$ des réflexions sur le biais d'horloge estimé,
- corriger les pseudo-distances avec le biais d'horloge estimé,
- calculer une erreur maximale $\Delta Y'$ sur les pseudo-distances corrigées due à l'impact maximal $b_{max}$.
- calculer une deuxième position $X_2$ à partir des pseudo-distances corrigées et d'une sous-matrice $H_F$ de la matrice d'observation $Hv$, la sous-matrice $H_F$ intégrant les paramètres positionnels seulement,
- calculer la marge $MMM_+$ à partir de la pseudo-inverse G' de la sous-matrice $H_F$ et de l'erreur maximale $\Delta Y$,
- calculer la deuxième limite de protection $VPL_2$ en ajoutant à la première limite de protection $VPL_1$ la marge $MMM_+$ et une distance entre la première position $P_1$ et la deuxième position $P_2$ parallèlement aux directions.

**3.** Procédé selon la revendication 1, comprenant l'étape de faire une somme des limites de protection et l'étape de calculer une position centrée par rapport à cette somme.

**4.** Procédé selon la revendication 1, dans lequel le corps mobile est un aéronef et les directions sont verticales.

**5.** Procédé selon la revendication 4, dans lequel la deuxième direction est orientée vers le bas.

**6.** Procédé selon la revendication 1, comprenant l'étape d'incorporer à la première limite de protection $PL_1$ une marge $MMM_-$ correspondant à un décalage, de la position calculée $X_1$ par rapport à la position réelle $X$, qui soit dans la deuxième direction et qui soit du à des réflexions des signaux.

## Claims

**1.** A method of determining a protection limit around a position $X_1$ of a moving body fitted with a satellite signal receiver,

the position $X_1$ being calculated from pseudo-distances calculated from position and time data derived from signals transmitted by a constellation of satellites, the method comprising the step of calculating a protection limit $VPL_1$ in a first direction from the position $X_1$, and being **characterized in that** it further comprises the steps of:

· calculating a margin MMM+ corresponding to an offset of the calculated position relative to a real position $X_F$ of the moving body, which offset is in a first direction and is due to reflections of the signals during transmission thereof; and

· calculating a second protection limit $VPL_2$ on the position calculated in a second direction opposite to the first direction from the calculated position, and incorporating the margin therein.

2. A method according to claim 1, in which for the calculation of the position $X_1$ from the pseudo-distances being performed by using an observation matrix $H_v$ of the constellation that incorporates position and time parameters, the margin MMM+ and the second protection limit $VPL_2$ are calculated using the following steps:

· estimating a clock bias $\hat{b}$ of the receiver and determining a maximum impact $b_{max}$ of reflections on the estimated clock bias;

· correcting the pseudo-distances with the estimated clock bias;

· calculating a maximum error $\Delta Y'$ on the corrected pseudo-distances due to the maximum impact $b_{max}$;

· calculating a second position $X_2$ from the corrected pseudo-distances and from a submatrix $H_F$ of the observation matrix $H_v$, the submatrix $H_F$ incorporating position parameters only;

· calculating the margin MMM+ from the pseudo-inverse G' of the submatrix $H_F$ and from the maximum error $\Delta Y$; and

· calculating the second protection limit $VPL_2$ by adding to the first protection limit $VPL_1$ the margin MMM+ and a distance between the first position $P_1$ and the second position $P_2$ parallel to the directions.

3. A method according to claim 1, including the step of summing the protection limit and a step of calculating a centered position relative to said sum.

4. A method according to claim 1, in which the moving body is an aircraft and the directions are vertical.

5. A method according to claim 4, in which the second direction is oriented downwards.

6. A method according to claim 1, including the step of incorporating a margin MMM- in the first protection limit $PL_1$, the margin corresponding to an offset of the calculated position $X_1$ relative to the real position X in the second direction and due to reflections of these signals.

**Patentansprüche**

1. Verfahren zum Bestimmen der Schutzgrenze um eine Position $X_1$ eines beweglichen Körpers, der mit einem Empfänger für Satellitensignale ausgestattet ist, wobei die Position $X_1$ ausgehend von Pseudodistanzen berechnet wird, die ausgehend von Positionsdaten und Zeitdaten berechnet werden, die aus Signalen stammen, die von einer Satellitenkonstellation übertragen werden, wobei das Verfahren den Schritt des Berechnens einer Schutzgrenze $VPL_1$ in einer ersten Richtung ab der Position $X_1$ umfasst, **dadurch gekennzeichnet, dass** das Verfahren ferner die Schritte umfasst:

- Berechnen einer Marge $MMM_+$, die einer in die erste Richtung weisenden und auf Reflexionen der Signale im Laufe ihrer Übertragung zurückzuführenden Abweichung der berechneten Position von einer tatsächlichen Position $X_F$ des beweglichen Körpers entspricht,

- Berechnen einer zweiten Schutzgrenze $VAL_2$ an der berechneten Position in einer zur ersten Richtung entgegengesetzten zweiten Richtung ab der berechneten Position, indem man dort die Marge einbezieht.

2. Verfahren nach Anspruch 1, wobei die Berechnung der Position $X_1$ ausgehend von den Pseudodistanzen dadurch erfolgt, dass eine Beobachtungsmatrix $Hv$ zur Beobachtung der Konstellation verwendet wird, die Positionsparameter und Zeitparameter integriert, wobei die Berechnung der Marge $MMM_+$ und der zweiten Schutzgrenze $VPL_2$ die Schritte umfasst:

- Schätzen eines Empfängeruhrenfehlers $\hat{b}$ und Bestimmen eines maximalen Einflusses $b_{max}$ der Reflexionen

auf den geschätzten Uhrenfehler,

- Korrigieren der Pseudodistanzen mit dem geschätzten Uhrenfehler,

- Berechnen eines maximalen Fehlers $\Delta Y'$ für die korrigierten Pseudodistanzen, der auf den maximalen Einfluss $b_{max}$ zurückzuführen ist,

- Berechnen einer zweiten Position $X_2$ ausgehend von den korrigierten Pseudodistanzen und einer Untermatrix $H_F$ der Beobachtungsmatrix $Hv$, wobei die Untermatrix $H_F$ nur die Positionsparameter integriert,

- Berechnen der Marge $MMM_+$ ausgehend von dem Pseudo-Kehrwert $G'$ der Untermatrix $H_F$ und dem maximalen Fehler $\Delta Y$,

- Berechnen der zweiten Schutzgrenze $VPL_2$, indem man zur ersten Schutzgrenze $VPL_1$ die Marge $MMM_+$ und eine Distanz zwischen der ersten Position $P_1$ und der zweiten Position $P_2$ parallel zu den Richtungen hinzufügt.

3. Verfahren nach Anspruch 1, umfassend den Schritt des Bildens einer Summe aus den Schutzgrenzen und den Schritt des Berechnens einer in Bezug auf diese Summe zentrierten Position.

4. Verfahren nach Anspruch 1, wobei der bewegliche Körper ein Flugzeug und die Richtungen vertikal sind.

5. Verfahren nach Anspruch 4, wobei die zweite Richtung nach unten gerichtet ist.

6. Verfahren nach Anspruch 1, umfassend den Schritt des Einbeziehens einer Marge $MMM_-$ in die erste Schutzgrenze $PL_1$, wobei die Marge einer in die zweite Richtung weisenden und auf Reflexionen von Signalen zurückzuführenden Abweichung der berechneten Position $X_1$ von der tatsächlichen Position $X$ entspricht.

FIG.1

2.7

2.8

$X_J$

$Y_7$

$X_F$

$Y_8$

$Y'_7$

FIG.2

2.7

2.8

$Y_7$

$Y'_7$

$Y_8$

$X_J$

$X_F$

FIG.3

## RÉFÉRENCES CITÉES DANS LA DESCRIPTION

**Documents brevets cités dans la description**

- US 2004239560 A

- EP 1729145 A